(19) Europäisches Patentamt

European Patent Office

Office européen des brevets

(11) Numéro de publication: **0 278 855 B1**

(12) **FASCICULE DE BREVET EUROPEEN**

(45) Date de publication de fascicule du brevet: **16.09.92**   (51) Int. Cl.⁵: **A61B 19/00, A61C 17/00**

(21) Numéro de dépôt: **88400231.2**

(22) Date de dépôt: **02.02.88**

(54) **Instrument chirurgical ou dentaire et canules pour aspirer, nettoyer, sécher et éclairer.**

(30) Priorité: **06.02.87 FR 8701569**

(43) Date de publication de la demande:
**17.08.88 Bulletin 88/33**

(45) Mention de la délivrance du brevet:
**16.09.92 Bulletin 92/38**

(84) Etats contractants désignés:
**AT CH DE ES FR GB IT LI NL SE**

(56) Documents cités:
EP-A- 0 138 119      FR-A- 1 449 995
FR-A- 2 575 382      GB-A- 1 262 214
US-A- 2 709 852      US-A- 2 843 112

(73) Titulaire: **Issalene, Robert**
**7 rue Ampère**
**F-83100 Toulon(FR)**

Titulaire: **Lantrua, Jean-François**
**"La Campagne", Lot Les Grès de Macany**
**F-83400 Hyères(FR)**

(72) Inventeur: **Issalene, Robert**
**7 rue Ampère**
**F-83100 Toulon(FR)**
Inventeur: **Lantrua, Jean-François**
**"La Campagne", Lot Les Grès de Macany**
**F-83400 Hyères(FR)**

(74) Mandataire: **Combe, André et al**
**CABINET BEAU DE LOMENIE 55, rue d'Amsterdam**
**F-75008 Paris(FR)**

## Description

La présente invention a pour objet des instruments chirurgicaux et dentaires et des canules destinées à aspirer, à nettoyer, à sécher et à éclairer.

Le secteur technique de l'invention est celui de la construction des appareils de chirurgie notamment dentaire.

Les installations dentaires comportent souvent des porte-canules qui sont fixés à l'extrémite d'un tuyau connecté à un moyen d'aspiration et sur lesquels on emboîte une canule d'aspiration, jetable ou stérilisable, dont on introduit l'extrémité dans la bouche pour aspirer les liquides ou les débris.

On connaît des instruments d'aspiration en bouche qui sont combinés à des moyens de nettoyage permettant d'envoyer un jet d'eau pulvérisée ou un jet d'air dans la bouche.

On connaît également des instruments dentaires de nettoyage qui sont associés à une fibre optique qui permet d'éclairer l'intérieur de la bouche.

Le brevet US-A-3 727 310 (BAKER) décrit des canules d'aspiration dentaires qui comportent une canule creuse en forme de poignée pistolet équipée d'un conduit longitudinal maintenu en dépression et, en outre, de deux petits conduits qui sont logés dans la paroi de la canule et qui véhiculent l'un de l'eau et l'autre de l'air comprimé. La canule comporte un nez amovible.

La demande de brevet EP-A-0 138 119 (SIEMENS) décrit une poignée de pulvérisation dentaire qui comporte une poignée coudée, sur laquelle est emmanchée une buse amovible qui peut tourner légèrement sur son axe.

La poignée comporte des conduits d'air et d'eau et des conducteurs électriques qui alimentent une lampe électrique placée au centre d'un alésage dans lequel la buse amovible est emmanchée.

La buse amovible comporte un conduit axial qui véhicule l'air. Elle comporte un petit conduit qui véhicule l'eau, dont l'extrémité avant est disposée au centre du conduit d'air axial. Elle comporte un conducteur de lumière qui est disposé au centre de la partie arrière du conducteur d'air axial et à la périphérie de l'extrémité avant de celui-ci.

L'instrument décrit dans ce brevet est un appareil de nettoyage qui n'aspire pas.

La demande de brevet EP-A-0 022 150 (PISANU) décrit un instrument de nettoyage par pulvérisation et succion destiné plus particulièrement aux soins dentaires. Cet instrument est connecté sur une poignée qui est placée à l'extrémité d'un flexible d'aspiration. Il comporte une canule d'aspiration coudée ou droite. Il comporte un petit tube logé à l'intérieur du conduit d'aspiration de la canule et au centre de l'extrémité distale de celle-ci. Ce tube peut véhiculer de l'air, un liquide ou un mélange des deux.

La canule qui est reliée au petit tube véhiculant le mélange d'air et d'eau ne peut pas tourner autour de son axe.

Le brevet FR-A-1 449 995 (FIRMA JENAER...) décrit des instruments qui peuvent être introduits dans des cavités du corps humain et qui comportent deux tubes entre lesquels sont disposées des fibres optiques pour éclairer le champ opératoire. Le tube central peut servir à aspirer des corps étrangers, à introduire un dispositif de manutention ou à injecter un liquide ou un gaz.

Le brevet US-A-3 208 145 décrit des canules d'aspiration dentaires comportant deux petits tubes d'air et d'eau placés à l'extérieur de la canule.

Le brevet US-A-3 624 907 (BRASS et Al.) décrit des instruments dentaires destinés à nettoyer les canaux des dents. Ces instruments comportent, à leur extrémité, une aiguille d'injection de liquide qui est placée au centre d'une buse d'aspiration.

La brevet US-A-2 709 852 (MAURER) décrit un instrument dentaire pour aspirer, nettoyer et éclairer. Il comporte une canule d'aspiration amovible dans laquelle est, logée une fuse amenant un jet d'eau contenant du matériau abrasif. L'éclairage de la zone de travail est assuré par la transmission de lumière à travers la paroi de la canule d'aspiration.

Le problème que l'invention cherche à résoudre est de procurer des instruments porte-canules d'aspiration qui s'adaptent sur les porte-canules standards équipant souvent les cabinets dentaires et qui peuvent recevoir des canules d'aspiration comportant des moyens d'éclairage de l'intérieur de la bouche, des moyens de lavage par jet d'eau, pulvérisée ou non, et des moyens de séchage incorporés à la canule qui laissent libre le canal d'aspiration de la canule et qui ne gênent pas la liberté de pivotement de celle-ci autour de son axe.

La solution, conforme à la présente invention, pour résoudre le problème posé consiste en un instrument chirurgical ou dentaire comportant un corps creux comportant des moyens permettant de le relier à un tuyau d'aspiration, des moyens permettant d'y emmancher une canule amovible, des moyens pour l'amenée de fluides qui seront transportés au niveau de l'extrémité de ladite canule, et une amenée de courant électrique permettant l'éclairage d'une ampoule, dans lequel :

- ledit corps creux contient un manchon, en un matériau transparent ayant un indice de réfraction supérieur à celui de l'air, traversé par un alésage axial dont le diamètre est égal au diamètre intérieur de ladite canule, ledit manchon comportant, à sa périphérie, un logement dans lequel est placée ladite ampoule qui émet de la lumière en direction de ladite canule ;

- ladite canule est en un matériau transparent ayant un indice de réfraction supérieur à celui de l'air, l'extrémité arrière de ladite canule est, lorsque ladite canule et emmanchée dans ledit corps creux, en contact avec l'extrémité avant dudit manchon, de sorte que la lumière générée par ladite ampoule soit véhiculée dans ledit manchon puis dans ladite canule dont la paroi joue le rôle de transporteur de lumière ; ladite canule comportant en outre dans sa paroi des conduits longitudinaux de transport desdits fluides, lesdits conduits débouchant, d'une part, éventuellement par l'intermédiaire d'une chambre de mélange et d'un orifice à l'extrémité extérieure de ladite canule et, d'autre part, au voisinage de l'autre extrémité de la canule sur la paroi externe de ladite canule en deux points qui sont décalés longitudinalement et qui communiquent avec des espaces disposés entre des joints toriques ménagés dans la face interne dudit corps creux espacés dans lesquels débouchent également les extrémités des moyens d'amenée desdits fluides ;
- ladite canule et ledit corps creux étant au niveau des parties de ces pièces correspondant à l'emmanchage, de section cylindrique, de façon que ladite canule puisse pivoter sur elle-même dans ledit corps creux.

Le invention concerne également des canules d'aspiration adaptées pour être emmanchées dans un corps creux pour former un tel instrument.

La description suivante se réfère aux dessins annexés qui représentent, sans aucun caractère limitatif, des exemples de réalisation d'instruments et de canules selon l'invention.

Les figures 1 et 2 représentent des vues en perspective de deux utilisations possibles d'un instrument selon l'invention ;

la figure 3 est une coupe axiale éclatée d'un instrument selon l'invention ;

les figures 4 et 5 sont des vues de dessus et en coupe transversale d'une canule selon un premier mode de réalisation de l'invention ;

les figures 4a et 5b sont des vues semblables aux figures 4 et 5 d'une canule selon un second mode de réalisation de l'invention, la figure 5a étant une vue partielle en coupe axiale selon Va-Va de la figure 5 ;

la figure 6 est une coupe transversale selon VI-VI de la figure 3 ;

la figure 7 est une coupe axiale d'une variante de réalisation du manchon transparent.

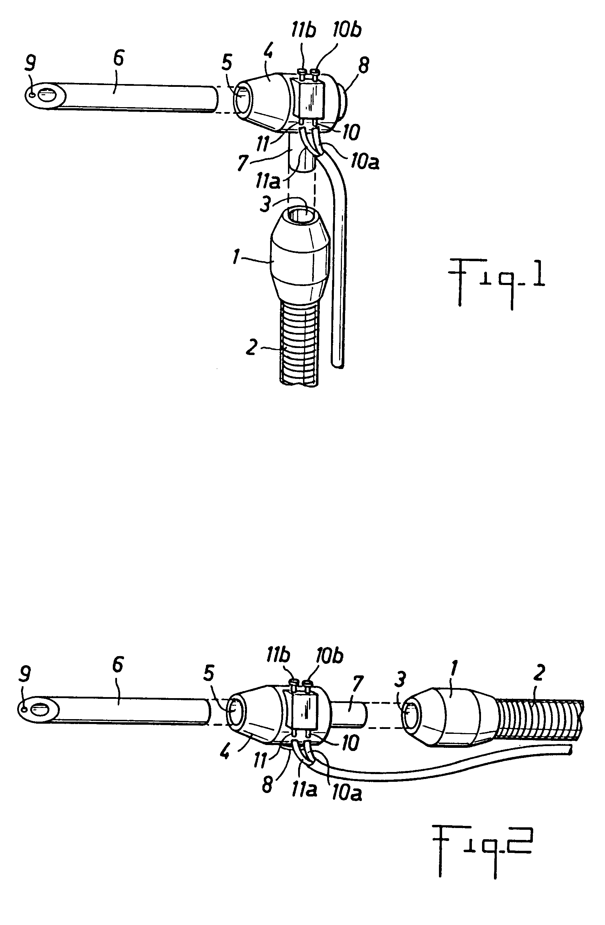

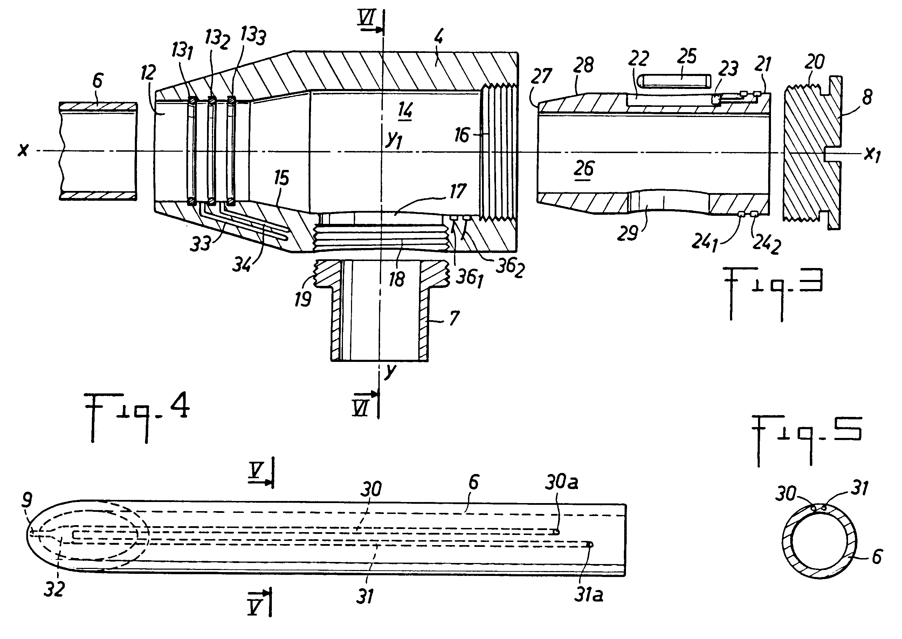

Les figures 1 et 2 représentent un porte-canules 1 qui est fixé à l'extrémité d'un tuyau d'aspiration 2, c'est-à-dire d'un tuyau qui est connecté sur un moyen d'aspiration quelconque. De tels porte-canules équipent souvent les installations de soins dentaires. Le porte-canules comporte, à son extrémité avant, un alésage 3, dans lequel on emmanche habituellement des canules d'aspiration jetables après usage ou stérilisables, lesquelles canules servent à aspirer des liquides et des débris à l'intérieur de la bouche.

Un instrument selon l'invention comporte un corps creux 4 qui comporte, à son extrémité avant, un alésage 5, dans lequel peut être emmanchée, de façon sensiblement étanche, une canule d'aspiration 6. Le corps 4 est traversé de part en part par un canal qui fait communiquer l'intérieur de la canule avec le flexible d'aspiration 2.

Le corps creux 4 est équipé d'une pièce de connexion amovible 7, qui comporte un embout dont le diamètre extérieur correspond à celui des canules, de sorte que cet embout peut être emmanché dans l'alésage 3 d'un porte-canules traditionnel 1.

La pièce de connexion 7 peut occuper deux positions différentes sur le corps 4. A cet effet, le corps 4 comporte deux orifices circulaires identiques, munis chacun d'un filetage femelle : un premier orifice axial qui est situé à l'extrémité arrière du corps creux 4 et qui est centré sur l'axe longitudinal du corps creux 4 et un deuxième orifice qui est situé sur la paroi latérale du corps 4 et dont l'axe est perpendiculaire à l'axe longitudinal du corps 4.

Le corps creux 4 peut également être équipé d'un bouchon fileté 8 qui peut être vissé sur l'un ou l'autre des deux orifices filetés précités.

La figure 1 représente un premier montage dans lequel la pièce de connexion 7, qui est filetée, est vissée sur l'orifice latéral, tandis que l'orifice axial est obturé par le bouchon fileté. Dans ce cas, le corps 4 forme avec le porte-canules 1 une poignée révolver.

La figure 2 représente un deuxième montage dans lequel le corps 4 est disposé dans l'alignement du porte-canules 1, la pièce de connexion 7 étant vissée sur l'orifice axial, tandis que le bouchon 8 est vissé sur l'orifice latéral.

Les canules 6 selon l'invention sont réalisées en un matériau transparent ayant un indice de réfraction supérieur à un, par exemple en polycarbonate, qui résiste à des températures pouvant aller jusqu'à 150°C, ce qui permet de stériliser les canules à chaud. L'extrémité avant des canules 6 est taillée en biseau.

Le corps creux 4 contient une petite lampe électrique et des moyens qui permettent de diriger dans une direction sensiblement axiale la lumière émise par ladite lampe et qui concentrent cette lumière sur la couronne de matériau transparent qui constitue l'extrémité arrière de la canule 6, qui est emmanchée dans le corps creux 4.

La lumière pénètre dans la paroi de la canule et elle est canalisée vers l'extrémité avant de la canule.

Comme le matériau a un indice de réfraction supérieur à un et la lumière a une direction sensiblement axiale, la lumière subit des réflexions totales sur les faces interne et externe de la canule dont le matériau forme un conduit de lumière et elle sort à l'extrémité avant sous la forme d'un faisceau de lumière annulaire, concentrique avec ladite canule, d'où un très bon éclairage de la zone vers laquelle la canule est dirigée.

Une canule 6, selon l'invention, comporte deux petits conduits ou canaux longitudinaux de transport de fluide débouchant d'une part à l'extrémité extérieure de la canule, et d'autre part au voisinage de l'autre extrémité de la canule où ils sont reliés chacun à une source d'alimentation en fluide, l'un des conduits véhiculant par exemple de l'eau ou un liquide, tandis que l'autre véhicule de l'air ou un gaz comprimé. Ces fluides peuvent être envoyés soit séparément, soit simultanément pour produire un jet de liquide pulvérisé.

Ces conduits de transport de fluide sont généralement réalisés sous forme de tubes capillaires noyés dans la paroi de la canule ou encore de petits canaux creusés dans cette paroi. Ainsi, le canal central qui traverse la canule 6 et forme une partie du trajet de l'aspiration est libre de tout obstacle.

Le corps creux 4 comporte deux embouts 10 et 11 sur chacun desquels vient se connecter un petit tube flexible 10a et 11a, véhiculant respectivement un liquide et un gaz ou une poudre en suspension dans un gaz. Chaque embout 10 et 11 communique avec une vanne à piston plongeur 10b et 11b qui comporte une tête de manoeuvre qui peut être manoeuvrée avec les doigts par le praticien qui tient d'une main la poignée 1 portant un instrument selon l'invention. Cette manoeuvre est possible dans les deux montages représentés par les figures 1 et 2.

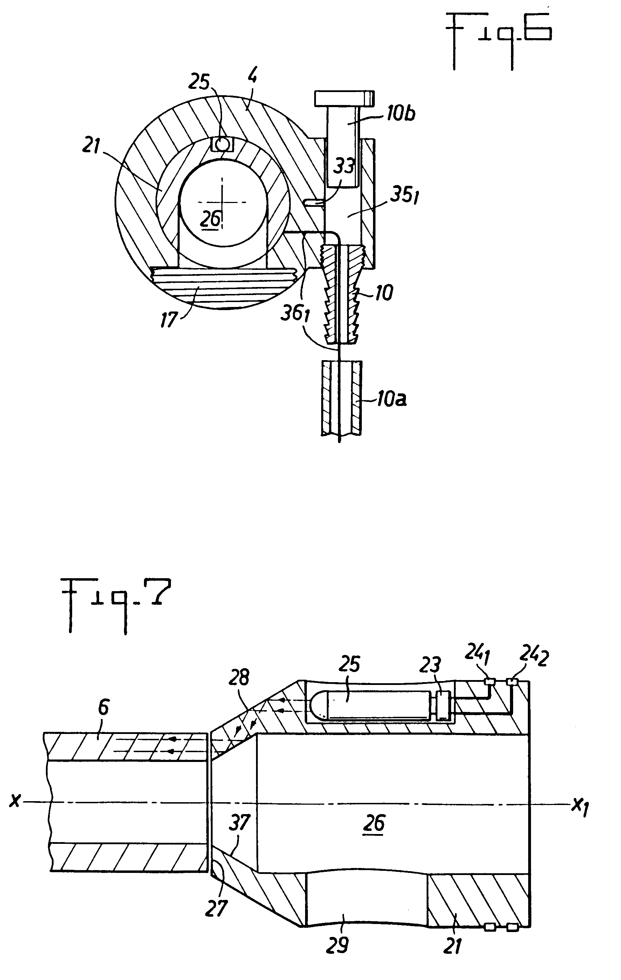

La figure 3 est une vue éclatée en coupe axiale d'un instrument selon le mode de réalisation actuellement préféré de l'invention.

On retrouve sur cette figure le corps creux 4 qui a une forme cylindro-conique d'axe x $x_1$, l'extrémité arrière d'une canule 6, une pièce de connexion 7 et un bouchon 8.

Le corps creux 4 comporte, à l'extrémité avant, un alésage cylindrique 12 dont le diamètre intérieur est légèrement supérieu au diamètre extérieur des canules 6.

L'alésage 12 comporte trois gorges périphériques $13_1$, $13_2$ et $13_3$ qui reçoivent chacune un joint torique qui sert de joint d'étanchéité pour la canule 6 qui est engagée dans l'alésage 12.

Le corps creux 4 comporte, en outre, un contre-alésage cylindrique 14 dont le diamètre est supérieur à celui de l'alésage 12. Le contre-alésage 14 est relié à l'alésage 12 par un alésage tronconique 15.

Les alésages 12, 14 et 15 forment un canal d'axe x $x_1$ qui traverse le corps creux 4 de part en part.

L'alésage 14 débouche à l'extrémité arrière par un orifice qui comporte un filetage femelle 16.

Le corps creux 4 comporte un canal radial 17 qui débouche dans l'alésage 14. Ce canal débouche vers l'extérieur par un orifice latéral qui comporte un filetage femelle 18. Les filetages 16 et 18 sont identiques.

La pièce de connexion 7 comporte un embout cylindrique dont le diamètre externe est identique au diamètre des canules 6, de telle sorte que cet embout peut être emmanché dans un porte-canules standard. Elle comporte un filetage mâle 19 qui peut être vissé dans les filetages 16 ou 18.

Un instrument selon l'invention comporte un bouchon 8 muni d'un filetage mâle 20 qui peut également se visser dans l'un des filetages 16 et 18.

A titre d'illustration seulement, la figure 3 représente une pièce de connexion 7 venant se visser sur l'orifice fileté latéral 18 et un bouchon 8 venant se visser sur l'orifice fileté arrière 16, mais l'inverse est également possible.

Le corps creux 4 contient, en outre, une pièce intermédiaire 21 qui a la forme d'un manchon cylindro-conique. Ce manchon est en un matériau transparent ayant un indice de réfraction élevé, par exemple en polycarbonate.

Le manchon 21 comporte, à sa périphérie, un logement extérieur 22 réalisé dans la paroi dudit manchon, et susceptible de recevoir une petite ampoule 25.

A l'extrémité arrière du logement 22 est prévue une douille 23 qui est connectée sur deux bagues conductrices de l'électricité $24_1$ et $24_2$ logées dans deux gorges periphériques du manchon. L'ampoule 25 est enfichée sur la douille 23 et émet un rayon lumineux vers l'avant, en direction de la canule.

Le manchon 21 est traversé de part en part par un alésage axial 26, dont le diamètre intérieur est égal au diamètre intérieur des canules 6.

L'extrémité avant du manchon 21 comporte une surface radiale 27 en forme d'anneau dont la largeur est égale à l'épaisseur des parois de la canule 6.

L'extrémité avant du manchon 21 comporte, en outre, une surface tronconique 28 qui converge vers la surface radiale et dont l'angle d'ouverture est le même que celui de l'alésage tronconique 15, contre lequel elle vient s'appuyer lorsque la manchon est placé à l'intérieur du corps creux.

Dans cette position, l'anneau 27 se trouve placé au contact de la couronne de matériau transparent formant l'extrémité arrière de la canule 6 et ladite couronne et ledit anneau coïncident, c'est-à-dire qu'ils se superposent parfaitement.

Etant donné que l'ampoule est située extérieurement à l'alésage du manchon 21, et que cet alésage correspond exactement au canal central de la canule 6, il n'y a aucun obstacle sur le trajet de l'aspiration à l'intérieur de l'instrument selon l'invention.

Cette conformation est particulièrement avantageuse puisqu'elle permet d'éviter le risque que des particules ne viennent se déposer à l'intérieur de l'instrument, et par conséquent la nécessité de nettoyages fréquents.

Le manchon 21 comporte à l'arrière un corps cylindrique dont le diamètre externe est légèrement inférieur au diamètre de l'alésage 14, dans lequel il est engagé, de sorte que la pièce intermédiaire peut être engagée à l'intérieur du corps creux ou extraite de celui-ci à travers l'orifice fileté 16.

Le manchon 21 comporte un canal radial 29 qui se positionne en regard du canal latéral 17, lorsque le manchon est engagé dans le corps creux 4.

Une canule 6, selon l'invention, est réalisée en un matériau transparent, par exemple en polycarbonate, sous la forme d'un tronçon de tube ayant les dimensions des canules d'aspiration courantes.

L'extrémité avant de la canule est taillée en biseau de façon connue et elle est parfaitement polie ainsi que son extrémité arrière. La forme du biseau sera choisie de telle manière à permettre de concentrer et de diriger la lumière de façon contrôlée où on le souhaite.

Comme on l'a vu, la canule comporte, dans sa paroi, deux conduits longitudinaux de transport de fluide, lesdits conduits débouchant d'une part à l'extrémité extérieure de la canule, d'autre part au voisinage de l'autre extrémité de la canule sur la paroi externe de ladite canule, en des points qui sont décalés longitudinalement et qui communiquent avec des espaces formés entre les joints toriques $13_1$, $13_2$, $13_3$ ménagés dans la face interne du corps creux (4) dans lesquels débouchent également des moyens d'amenée des fluides qui seront décrits ci-après.

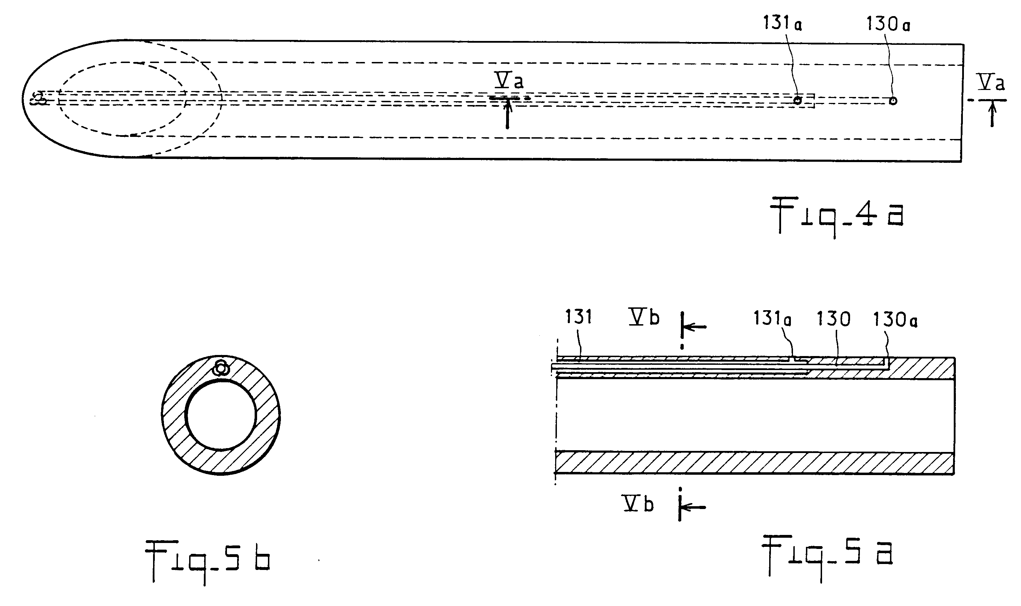

On a représenté aux figures 4 et 5 un premier mode de réalisation d'une canule selon l'invention. Comme on le voit, les deux conduits longitudinaux 30, 31 s'étendent dans la paroi de la canule 6, le long de la génératrice qui aboutit au point le plus en avant de l'extrémité biseautée.

A leur extrémité avant, les conduits 30, 31 se rejoignent dans une chambre de mélange 32 qui comporte un orifice 9 débouchant au point le plus en avant de l'extrémité biseautée.

Les extrémités arrière des deux conduits débouchent radialement vers l'extérieur par deux orifices 30a et 31a qui sont décalés longitudinalement.

L'orifice 31a vient se positionner entre les deux joints toriques placés dans les gorges $13_2$ et $13_3$, tandis que l'orifice 30a vient se positionner entre les joints toriques placés dans les gorges $13_1$ et $13_2$.

On voit sur la figure 3 deux petits canaux d'alimentation en fluide 33 et 34 qui sont creusés dans la masse du corps creux 4 et qui débouchent dans l'alésage 12, l'un entre les gorges $13_1$ et $13_2$ et l'autre entre les gorges $13_2$ et $13_3$.

On a représenté aux figures 4a, 5a et 5b un second mode de réalisation d'une canule selon l'invention, qui constitue le meilleur mode de réalisation.

Les conduits 130, 131 toujours réalisés dans la paroi de la canule 6 sont ici concentriques. On fera circuler de préférence l'eau ou le liquide dans le conduit central et l'air ou le gaz dans le conduit périphérique.

De préférence le conduit périphérique 131, à son extrémité avant qui aboutit au point le plus en avant de l'extrémité biseautée, sera pincé et écrasé par exemple à l'aide d'un mandrin triangulaire, ce qui permet un centrage automatique de ce conduit sur le conduit central. Cette conformation permet également d'accroître la vitesse de l'air ou du gaz comprimé sortant du conduit périphérique.

A leur extrémité arrière, les deux conduits débouchent radialement vers l'extérieur par deux orifices 130a et 131a qui sont longitudinalement décalés et axialement alignés. Leur rôle et fonctionnement sont rigoureusement semblables à ceux des orifices 30a et 31a.

La figure 6 représente une coupe transversale selon VI-VI du corps creux 4 représenté sur la figure 2. Le manchon transparent 21 est représenté en place à l'intérieur du corps 4.

Le corps creux 4 comporte un appendice latéral dans lequel sont creusées deux chambres cylindriques verticales 35 dont une seule $35_1$ apparaît sur la figure 6. Chaque chambre 35 communique avec un des canaux 33 ou 34 creusés dans la masse du corps.

Chaque chambre 35 comporte, à sa partie inférieure, un raccord, tel que le raccord 10, comportant un embout cannelé sur lequel on connecte un petit tube flexible, tel que le tube 10a, véhiculant respectivement un liquide et un gaz.

Chaque chambre est équipée à sa partie supérieure d'une vanne 10b composée d'un piston plongeur qui est engagé dans la chambre et qui est muni d'une tête de manoeuvre sur laquelle le praticien appuie avec son pouce pour régler le débit d'eau ou d'air.

Un fil conducteur 36, de préférence en acier inoxydable, qui est connecté à l'une des bornes d'une source de courant continu en basse tension (3 à 4 volts), est placé à l'intérieur de chacun des tubes 10a qui sert en même temps de gaine isolante. Chaque fil $36_1$ ou $36_2$ traverse la masse du corps creux 4 et fait saillie à l'intérieur de l'alésage axial 14 dans une position telle qu'il vient au contact de l'un des anneaux conducteurs $24_1$ ou $24_2$ situé à la périphérie du manchon 21, ce qui permet d'alimenter la lampe 25.

Bien que l'on ait représenté sur les figures des canules rectilignes, il est précisé qu'un instrument selon l'invention peut également recevoir des canules coudées qui peuvent être orientées dans n'importe quelle position grâce à la liberté totale de rotation étanche de la canule autour de son axe.

En résumé, les avantages principaux des appareils dentaires selon l'invention sont les suivants.

Ils peuvent s'emboîter sur les porte-canules d'aspiration standards qui équipent habituellement les salles de soins dentaires sans avoir à modifier celles-ci. Il suffit d'adjoindre au tube d'aspiration une gaine contenant deux conduits d'air et d'eau dans chacun desquels passe un fil conducteur connecté à une source en basse tension.

Les dispositifs selon l'invention peuvent être montés dans l'alignement du porte-canules ou bien en utilisant celui-ci comme poignée révolver.

Les canules spéciales adaptables aux dispositifs selon l'invention permettent d'assurer à la fois les fonctions d'aspiration, d'amenée d'eau et d'air, donc de nettoyage et de séchage et également d'éclairage de l'intérieur de la bouche.

Ce résultat est atteint sans introduire aucun obstacle dans le canal d'aspiration, de sorte que celui-ci conserve toute son efficacité et en permettant d'orienter la canule d'aspiration dans n'importe quelle direction du fait qu'elle peut pivoter librement autour de son axe.

Les canules selon l'invention sont facilement interchangeables puisqu'il suffit de les emmancher dans le corps de l'appareil. Elles peuvent être stérilisées ou même jetées après usage car leur coût de fabrication est relativement faible. Elles peuvent être fabriquées en grande série par extrusion ou par moulage.

L'éclairage obtenu par les canules selon l'invention, qui font fonction de conduit de lumière, permet d'obtenir à l'extrémité distale de la canule un anneau de lumière qui éclaire bien la zone vers laquelle la canule est dirigée sans éblouir le praticien car la lumière sortant de la canule forme un faisceau annulaire dirigé vers l'avant.

La pièce intermédiaire en forme de manchon transparent 21 qui équipe les appareils selon l'invention peut être facilement extraite du corps par l'extrémité arrière de celui-ci, ce qui permet un démontage complet de l'appareil pour le nettoyer.

La figure 7 est une coupe axiale d'une variante de réalisation du manchon transparent 21 équipant un instrument selon l'invention.

Dans cette variante, la paroi externe de l'extrémité avant du manchon présente une surface conique 28 qui converge vers l'avant et l'alésage interne du manchon 26 présente également, à l'extrémité avant, une surface interne conique 37 qui est sensiblement parallèle à la surface externe conique 28, de sorte que les rayons émis par la lampe 25 dans une direction sensiblement parallèle à l'axe sont réfléchis sur les deux faces sensiblement parallèles 28 et 37 et entrent dans le matériau de la canule 6 avec une direction sensiblement axiale.

L'instrument qui vient d'être décrit trouve essentiellement application dans le domaine chirurgical ou dentaire.

**Revendications**

1.    Instrument chirurgical ou dentaire comportant un corps creux (4) comportant des moyens permettant de le relier à un tuyau d'aspiration (2), des moyens permettant d'y emmancher une canule amovible (6), des moyens (33, 34) pour l'amenée de fluides qui seront transportés au niveau de l'extrémité de ladite canule, et une amenée de courant électrique permettant l'éclairage d'une ampoule, dans lequel :

- ledit corps creux (4) contient un manchon (21), en un matériau transparent ayant un indice de réfraction supérieur à celui de l'air, traversé par un alésage axial (26) dont le diamètre est égal au diamètre intérieur de ladite canule (6), ledit manchon comportant, à sa périphérie, un logement (22) dans lequel est placée ladite ampoule (25) qui émet de la lumière en direction de ladite canule ;

- ladite canule est en un matériau transparent ayant un indice de réfraction supérieur à celui de l'air, l'extrémité arrière de ladite canule est, lorsqu' elle est emmanchée dans ledit corps creux, en contact avec l'extrémité avant dudit manchon, de sorte que la lumière générée par ladite ampoule (25) soit véhiculée dans ledit manchon puis dans ladite canule dont la paroi joue le rôle de transporteur de lumière ; ladite canule comportant en outre dans sa paroi les conduits longitudinaux (30, 31 ; 130, 131) de transport desdits fluides, lesdits conduits débouchant, d'une part, éventuellement par l'intermédiaire d'une chambre de mélange (32) et d'un orifice (9) à l'extrémité extérieure de ladite canule et, d'autre part, au voisinage de l'autre extrémité de la canule sur la paroi externe de ladite canule en deux points (30a, 31a ; 130a, 131a) qui sont décalés longitudinalement et qui communiquent avec des espaces disposés entre des joints toriques (13₁, 13₂, 13₃) ménagés dans la face interne dudit corps creux (4) espacés dans lesquels débouchent également les extrémités des moyens (33, 34) d'amenée desdits fluides ;

- ladite canule et ledit corps creux étant au niveau des parties de ces pièces correspondant à l'emmanchage, de section cylindrique, de façon que ladite canule puisse pivoter sur elle-même dans ledit corps creux.

2. Instrument selon la revendication 1, caractérisé en ce que ledit corps creux (4) comporte deux orifices (16, 18) situés l'un à l'extrémité arrière et l'autre sur la paroi latérale dudit corps creux et il comporte, en outre, un bouchon fileté (8) qui se visse sur l'un des deux orifices et un embout fileté (7) qui est vissé sur le deuxième orifice, de sorte que ledit corps creux peut être placé dans l'alignement d'un porte-canules lorsque l'embout fileté (7) est vissé sur l'orifice arrière (16) ou bien former une poignée révolver avec un porte-canules (1) lorsque ledit embout fileté est vissé sur l'orifice latéral.

3. Instrument selon l'une quelconque des revendications 1 et 2, caractérisé en ce que ledit corps creux comporte deux vannes à piston plongeur (10$_b$, 11$_b$) munies d'un bouton de manoeuvre qui sont placées chacune dans une chambre cylindrique (35₁, 35₂) qui communique, avec l'un desdits conduits de liquide ou de gaz (33, 34) et qui comporte un raccord (10, 11) sur chacun desquels on branche un petit tube en matière plastique (10a, 11a) connecté respectivement sur une source de liquide et sur une source de gaz comprimé et chacun des deux tubes contient un conducteur électrique (36₁, 36₂) qui est connecté sur une source de courant à basse tension, lesquels conducteurs (36₁, 36₂) alimentent ladite lampe (25).

4. Canules d'aspiration amovibles et stérilisables ou de préférence jetables constituées en un matériau transparent, caractérisées en ce qu'elles sont adaptées, notamment dans leur partie emmanchable, pour être emmanchées dans un corps creux pour former un instrument selon l'une des revendications 1 à 3.

5. Canules selon la revendication 4, caractérisées en ce qu'elles ont une extrémité extérieure taillée, par exemple en biseau, permettant une bonne utilisation de la lumière transportée par ladite canule et que les deux conduits (30, 31) sont placés au voisinage de la génératrice qui aboutit au point le plus en avant dudit biseau et débouchent dans une chambre de mélange (32) qui débouche à l'extrémité avant par un orifice (9) situé à proximité du point le plus en avant de l'extrémité biseautée.

6. Canules selon la revendication 4, caractérisées en ce qu'elles comprennent deux conduits longitudinaux concentriques (130, 131) de transport de fluide logés dans leurs parois.

**Claims**

1. Surgical or dental instrument comprising a hollow body (4) incorporating means for connecting it to a suction pipe (2), means for fitting thereon a removable cannula (6), means (33, 34) for supplying fluids which will be conveyed to the end of said cannula, and a supply of electrical current for illuminating a bulb, in which :

- said hollow body (4) contains a sleeve (21), made of a transparent material having a refraction coefficient greater than that of air, traversed by an axial bore (26) whose diameter is equal to the inner diameter of said cannula (6), said sleeve comprising, on its periphery, a housing (22) in which is placed said bulb (25) which emits light in the direction of said cannula;

- said cannula is made of a transparent material having a refraction coefficient greater than that of air, the rear end of said cannula is, when said cannula is fitted in said hollow body, in contact with the front end of said sleeve, so that the light generated by said bulb (25) is conveyed in said sleeve then in said cannula of which the wall performs the role of light conductor; said cannula further comprising in its wall longitudinal conduits (30, 31; 130, 131) for transporting said fluids, said conduits opening out, on the one hand, possibly via a mixing chamber (32) and an orifice (9), at the outer end of said canula and, on the other hand, in the vicinity of the other end of the cannula on the outer wall of said cannula at two points (30a, 31a; 130a, 131a) which are offset longitudinally and which communicate with spaces disposed between spaced 0-rings ($13_1$, $13_2$, $13_3$) arranged in the inner face of said hollow body (4), into which the ends of the means (33, 34) for supplying said fluids also open out;

- said cannula and said hollow body being at the level of those parts of these pieces corresponding to the fit, of cylindrical section, so that said cannula may pivot on itself in said hollow body.

2. Instrument according to claim 1, characterized in that said hollow body (4) comprises two orifices (16, 18) located, one, at the rear end and, the other, on the lateral wall of said hollow body and it further comprises a threaded stopper (8) which screws on one of the two orifices and a threaded endpiece (7) which is screwed on the second orifice, with the result that said hollow body may be placed in line with a cannula-holder when the threaded endpiece (7) is screwed on the rear orifice (16), or form a pistol grip with a cannula-holder (1) when said threaded endpiece is screwed on the lateral orifice.

3. Instrument according to any one of claims 1 and 2, characterized in that said hollow body comprises two valves with plunger piston ($10_b$, $11_b$) provided with a manoeuvring knob which are each placed in a cylindrical chamber ($35_1$, $35_2$) which communicates with one of said liquid or gas conduits (33, 34) and which comprises a connection (10, 11) on each of which is connected a small tube of plastics material ($10_a$, $11_a$) connected respectively to a source of liquid and to a source of compressed gas and each of the two tubes contains an electric conductor ($36_1$, $36_2$) which is connected to a source of low-voltage current, which conductors ($36_1$, $36_2$) supply said lamp (25).

4. Removable suction cannulae, which are sterilizable or preferably disposable, constituted by a transparent material, characterized in that they are adapted, particularly in their fittable part, to be fitted into a hollow body in order to form an instrument according to claims 1 to 3.

5. Cannulae according to claim 4, characterized in that their outer end is cut for example as a bevel, allowing correct use of the light conveyed by said cannula, and in that the two conduits (30, 31) are placed in the vicinity of the generatrice which terminates at the front-most point of said bevel and open out in a mixing chamber (32) which opens out at the front end by an orifice (9) located near the front-most point of the bevelled end.

6. Cannulae according to claim 4, characterized in that they comprise two concentric longitudinal conduits (130, 131) for conveying fluid, housed in their walls.

**Patentansprüche**

1. Chirurgisches oder zahnärztliches Instrument mit einem hohlen Körper (4), der Einrichtungen aufweist, die erlauben, ihn mit einem Absaugschlauch (2) zu verbinden, mit Einrichtungen, die erlauben, dort eine entfernbare Kanüle (6) einzupressen, Einrichtungen (33, 34) zur Zufuhr von Flüssigkeiten, die auf die Höhe des Endes der Kanüle gebracht werden, und mit einer Zufuhr von elektrischem Strom, der das Aufleuchten einer Lampe ermöglicht, in dem:
der hohle Körper (4) eine Muffe (21) enthält aus einem durchsichtigen Material, das einen Brechungskoeffizienten aufweist, der größer ist als jener von Luft, durchsetzt von einer Axialausnehmung (26), dessen Durchmesser gleich dem Innendurchmesser der Kanüle (6) ist, wobei die Muffe an ihrem Umfang eine Aufnahme (22) aufweist, in die die Glühbirne (25), die das Licht in Richtung auf die Kanüle wirft, angeordnet ist;
wobei die Kanüle aus einem durchsichtigen Material gebildet ist, das einen Brechungskoeffizienten aufweist, der größer ist als Luft, wobei das hintere Ende der Kanüle, wenn sie in den hohlen Körper eingetaucht ist, in Kontakt ist mit dem Vorderende der Muffe, derart, daß das von der Glühbirne (25) erzeugte Licht in die Muffe und sodann in die Kanüle geleitet wird, deren Seitenwand die Rolle des Lichtträgers spielt; wobei die Kanüle weiterhin an ihrer Außenwand Längskanäle (30, 31; 130, 131) zum Transport der Flüssigkeiten aufweist, wobei die Leitungen oder Kanäle einerseits gegebenenfalls mittels einer Mischungskammer (32) und einer Öffnung (9) am äußeren Ende der Kanüle und andererseits in der Nähe des anderen Endes der Kanüle auf die äußere Seitenwand der Kanüle in zwei Punkten (30a, 31a; 130a, 131a) münden, die längs versetzt angeordnet sind und die mit Räumen in Verbindung stehen, die zwischen torischen Dichtungen ($13_1$, $13_2$, $13_3$) angeordnet sind, die in der Innenseite des hohlen Körpers (4) beabstandet ausgebildet sind, in die ebenfalls die Enden der Fluidzufuhreinrichtungen (33, 34) münden;
wobei die Kanüle und der hohle Körper auf der Höhe der Bereiche dieser Teile am Einpreßbereich von zylindrischem Querschnitt sind, derart, daß die Kanüle auf sich selbst in dem hohlen Körper schwenken kann.

2. Instrument nach Anspruch 1, **dadurch gekennzeichnet,** daß der hohle Körper (4) zwei Öffnungen (16, 18) aufweist, von denen eine am hinteren Ende und die andere an der seitlichen Seitenwand des hohlen Körpers angeordnet ist, und er weiterhin einen Gewindestopfen (8) aufweist, der auf eine der beiden Öffnungen aufgeschraubt ist und ein Gewindeendstück (7) aufweist, das auf die zweite Öffnung aufgeschraubt ist, derart, daß der hohle Körper fluchtend mit einem Kanülenträger gesetzt werden kann, wenn das Gewindeendstück (7) auf die hintere Öffnung (16) aufgeschraubt ist oder einen Drehzapfen mit einem Kanülenträger (1) bilden kann, wenn das Gewindeendstück auf die seitliche Öffnung aufgeschraubt ist.

3. Instrument nach Anspruch 1 oder 2, **dadurch gekennzeichnet,** daß der Hohlkörper zwei Tauchkolbenschieber ($10_b$, $11_b$) aufweist, die mit einem Betätigungsknopf vesehen sind, die jeweils in einer zylindrischen Kammer ($35_1$, $35_2$) eingesetzt sind, die mit einer der Flüssigkeits- oder der Gasleitungen (33, 34) in Verbindung stehen und die eine Verbindung (10, 11) aufweisen, auf der jeweils ein kleines Kunststoffrohr (10a, 11a) angeschlossen wird, das jeweils mit einer Flüssigkeits- bzw. einer Druckgasquelle verbunden ist, und jedes der beiden Rohre einen elektrischen Leiter ($36_1$, $36_2$) aufweist, der mit einer Stromquelle mit niedriger Spannung verbunden ist, wobei die Leiter ($36_1$, $36_2$) die Lampe (25) speisen.

4. Entfernbare und sterilisierbare oder vorzugsweise wegwerfbare Ansaugkanülen, gebildet aus durchsichtigem Material, **dadurch gekennzeichnet,** daß sie geeignet sind, insbesondere in ihrem Einsetzbereich, daß sie in einen hohlen Körper eingesetzt werden, um ein Instrument nach einem der Ansprüche 1 bis 3 zu bilden.

5. Kanülen nach Anspruch 4, **dadurch gekennzeichnet,** daß sie ein verjüngtes äußeres Ende aufweist, beispielsweise ein schräg abgeschnittenes, das eine gute Verwendung des transportierten Lichtes durch die Kanüle erlaubt und daß beide Leitungen (30) 31) in der Nähe der Erzeugenden angeordnet sind, die am vordersten Punkt der Abschrägung endet, und in eine Mischkammer (32) münden, die am vordern Ende durch eine Öffnung (9) mündet, die in der Nähe des vordersten Punktes des abgeschrägten Endes angeordnet ist.

6. Kanülen nach Anspruch 4, **dadurch gekennzeichnet,** daß sie zwei konzentrischen Längsleitungen (130, 131) zum Transport von Fluiden aufweisen, die in ihren Seitenwänden aufgenommen sind.

Fig.1

Fig.2

Fig.3

Fig.4

Fig.5

EP 0 278 855 B1

Fig.6

25  4
21
33  10b
351
26
17
361  10
10a

Fig.7

28  25  23  241  242
6
x
37  26  x₁
27
29  21

Fig.4a

Fig.5a

Fig.5b